# EUROPEAN PATENT APPLICATION

(11) **EP 3 588 770 A1**
(43) Date of publication of application: **01.01.2020**
(21) Application number: 18757684.8
(22) Date of filing: 20.02.2018
(51) Int. Cl.: H02P 29/024, G05B 9/02

(54) **MOTOR CONTROL DEVICE AND MOTOR CONTROL SYSTEM**

(30) Priority: 21.02.2017 JP 2017030328
(71) Applicant: Omron Corporation, Kyoto-shi, Kyoto 600-8530 (JP)
(72) Inventor: UEMURA, Takao, Kyoto-shi Kyoto 600-8530 (JP); HASHIMOTO, Minoru, Kyoto-shi Kyoto 600-8530 (JP); TAMURA, Yoshihide, Kyoto-shi Kyoto 600-8530 (JP); AKAGI, Tetsuya, Kyoto-shi Kyoto 600-8530 (JP); JIMBO, Ryuichi, Kyoto-shi Kyoto 600-8530 (JP)
(74) Representative: Becker Kurig Straus
(86) International application number: PCT/JP2018/005949
(87) International publication number: WO 2018/155423

(57) **Abstract**

This motor control device for driving a motor can be connected to a controller for outputting an emergency stop signal, and comprises: a motor control unit which outputs a drive signal for the motor; a drive circuit which supplies, to the motor, a drive current for driving the motor, on the basis of the drive signal outputted from the motor control unit; an interruption circuit which interrupts transmission of the drive signal from the motor control unit to the drive circuit; an input terminal to which the emergency stop signal is inputted; and a safety control unit which, when the emergency stop signal is inputted to the input terminal, sends a command for causing the interruption circuit to interrupt the transmission of the drive signal, inspects whether or not the interruption circuit has operated normally, and, if an inspection result indicating that the interruption circuit has operated normally is not obtained, prohibits restarting of the motor control device.

## Description

### TECHNICAL FIELD

The present invention relates to a system that safely drives and controls a motor.

### BACKGROUND ART

In recent years, a servo system has been used for, for example, positioning control of operating units in various machines at manufacturing sites. An example of such a servo system includes a system including a motor for operating various mechanical devices, an encoder attached to the motor, a servo driver for driving the motor, and a control device for outputting position command information or the like to the servo driver. Efforts to ensure the safety of workers together with cost reduction and improvement in productivity are becoming important requirements at manufacturing sites. Therefore, a servo system is also required to be suitable for corresponding safety standards.

A safety driver including a safe torque off (STO) function of interrupting a drive current that is supplied to a motor in response to an interrupting signal from the outside in order to ensure safety at the time of using the motor is known (Patent Literature 1). Further, it is common to use a safety controller having an external device monitoring (EDM) function in combination with a safety driver in order to monitor whether a motor stop operation has been performed normally.

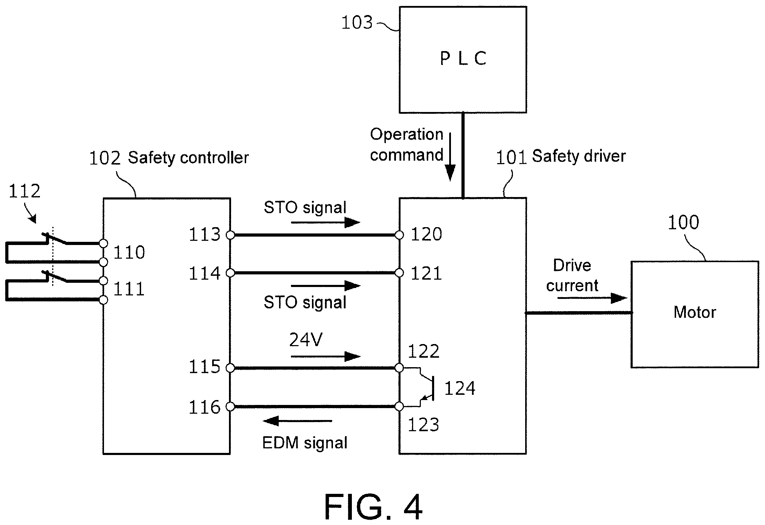

A configuration of a safe drive system of the related art corresponding to an STO and an EDM is illustrated in Fig. 4. This system includes a safety driver 101 for driving and controlling a motor 100 according to an operation command from a PLC 103, and a safety controller 102 for performing emergency stopping of the motor 100. An emergency stop switch 112 is connected to the safety input terminals 110 and 111 of the safety controller 102, and safety output terminals 113 and 114 of the safety controller 102 are connected to safety input terminals 120 and 121 of the safety driver 101, respectively. Further, a voltage of 24 V is supplied from the EDM power supply terminal 115 of the safety controller 102 to the EDM input terminal 122 of the safety driver 101, and an EDM output from the EDM output terminal 123 of the safety driver 101 is fed back to an EDM monitoring input terminal 116 of the safety controller 102. In this system, when the emergency stop switch 112 is pressed, an STO signal is input from the safety controller 102 to the safety driver 101 via the safety input terminals 120 and 121, and the supply of the drive current to the motor 100 is interrupted. When the driving current is interrupted normally, a photocoupler 124 is turned on, and an EDM output from the safety driver 101 becomes at a high level. Therefore, the safety controller 102 can ensure safety (that is, that the safety driver 101 is operating as instructed) by monitoring that a logic of a safety output of the safety controller 102 and an EDM monitoring input is correct.

### [Citation List]

### [Patent Literature]

[Patent Literature 1] Japanese Laid-open No. 2013-101459

### SUMMARY

### [Technical Problem]

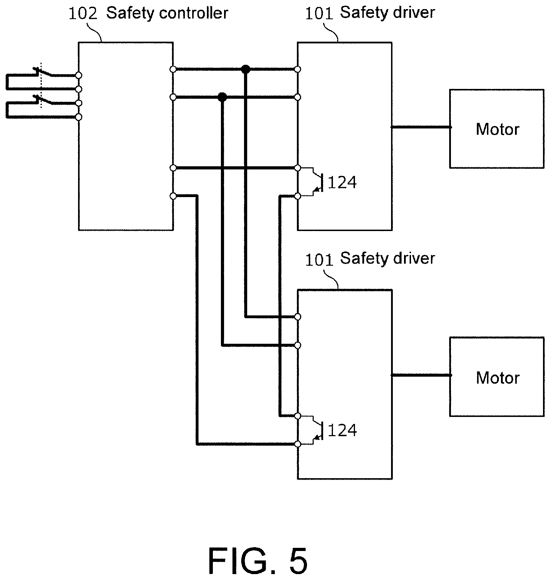

However, the safe drive system of the related art has the following problems. First, for example, when only the safety controller 102 among the safety controller 102 and the safety driver 101 is energized or when a monitoring setting according to a control timing of the safety controller 102 and the safety driver 101 is not correctly executed, the safety controller 102 may wrongly determine that a logic of the safety output and the EDM monitoring input is not correct. When such a wrong determination occurs, the safe drive system is unnecessarily stopped and a decrease in an operation rate or unnecessary inspection work is caused. Second, when a plurality of safety drivers 101 are cascaded as illustrated in Fig. 5, voltage drop of the photocoupler 124 causes a loss of an EDM signal. Therefore, there is a problem that the number of safety drivers 101 that can be connected to one safety controller 102 is limited.

The present invention has been made in view of the above-described circumstances, and an object of the present invention is to provide a motor control device capable of securing a safe operation without monitoring an operation using EDM.

### [Solution to Problem]

In order to solve the above problem, in the present invention, EDM monitoring on the controller side becomes unnecessary by providing a self-diagnosis function of an interruption circuit to a motor control device.

Specifically, a first aspect of the present invention is a motor control device that drives a motor, the motor control device being connectable to a controller that outputs an emergency stop signal, the motor control device including: a motor control unit that outputs a drive signal of the motor; a drive circuit that supplies a drive current for driving the motor to the motor on the basis of the drive signal output from the motor control unit; an interruption circuit that interrupts transfer of the drive signal from the motor control unit to the drive circuit; an input terminal to which the emergency stop signal is input; and a safety control unit that instructs the interruption circuit to interrupt transfer of the drive signal when the emergency stop signal is input to the input terminal, checks whether or not the interruption circuit has operated normally, and prohibits re-activation of the motor control device when a check result indicating that the interruption circuit has operated normally is not obtained.

With this configuration, after the motor control device issues an interrupting command to the interruption circuit according to the emergency stop signal, the interruption circuit checks by itself whether or not the interruption circuit has operated normally, and prohibits re-activation of the motor control device when normal operation cannot be confirmed. Therefore, when a failure or a defect (for example, welding of a contact) of the interruption circuit occurs, careless re-activation can be suppressed and safety is secured.

Further, by providing such a safety function (self-diagnosis function of the interruption circuit) to the motor control device, EDM monitoring on the controller side becomes unnecessary, and as a result, it is possible to eliminate unnecessary system shutdown due to a wrong determination of the controller, which is a problem of the related art. Further, since EDM wirings between the controller and the motor control device are not necessary, installation work or wirings of the system can be simplified. In addition, there is an advantage that it is possible to substantially eliminate restriction on the number of motor control devices that can be connected to one controller, and to improve a degree of freedom in system configuration.

The motor control device may further include an error notification unit that notifies a user that an abnormality has occurred in an operation of the interruption circuit when the check result indicating that the interruption circuit has normally operated is not obtained. It is possible to improve convenience for users by causing the motor control device itself to have an error notification function.

The interruption circuit may include a safety relay including an a-contact for switching between conduction and interrupting between the motor control unit and the drive circuit, and a b-contact complementarily interlocked to the a-contact, and the safety control unit may interrupt transfer of the drive signal by stopping application of a voltage to the safety relay to cause the a-contact to enter an open state, and check whether or not the interruption circuit has normally operated on the basis of a state of the b-contact. With this configuration, it is possible to improve the safety of the motor control device since a failure or defect of the interruption circuit can be detected simply and reliably.

It is preferable for the interruption circuit to include a plurality of the safety relays connected in series. It is possible to further improve the safety of the motor control device by achieving multiplexing of such an interruption circuit.

The safety control unit may determine that the interrupting in the interruption circuit has been executed normally when the b-contacts of all the safety relays are in a closed state, and determine that there is an abnormality in the interruption circuit when the b-contact of at least one of the safety relays is in an open state. With this configuration, an abnormality in the interruption circuit is detected as long as a defect occurs in some of the multiplexed safety relays, and re-activation of the servo driver is prohibited. Therefore, it is possible to rapidly detect an abnormality in the interruption circuit before the interruption circuit completely fails, and prevent emergency stopping from being disabled in advance.

When the check result indicating that the interruption circuit has normally operated is not obtained, the safety control unit may maintain a state in which the application of the voltage to the safety relay has stopped until an abnormality in the interruption circuit is eliminated, even when an activation request signal is input. With such a safety function, since inadvertent re-activation before the abnormality (for example, welding of the contact) of the interruption circuit is not resolved can be suppressed, the safety of the motor control device can be further improved.

A second aspect of the present invention provides a motor control system including: a motor control device according to the first aspect of the present invention; and a controller including an output terminal for outputting an emergency stop signal, wherein the output terminal of the controller and the input terminal of the motor control device are connected, and there is no path for feeding back a check result indicating whether or not the interruption circuit has normally operated from the motor control device to the controller.

It should be noted that the present invention can be understood as a motor control device having at least some of the above configurations or functions. A servo driver, an inverter, or the like can be illustrated as the motor control device. Further, the present invention can also be understood as a motor control system or a servo drive system including the motor control device and the controller described above. Further, the present invention can be understood as a servo system including a servo drive system, a servo motor, and a PLC. Furthermore, the present invention can also be understood as a control method for executing at least some of the above processes. Further, the present invention can be understood as a computer program for causing a computer (a processor such as an MPU) to execute this method, or a computer-readable storage medium storing this computer program non-temporarily. Each of the above means and processes can be combined with one another as far as is possible to constitute the present invention.

### [Advantageous Effects of Invention]

According to the present invention, it is possible to provide a motor control device capable of securing a safe operation without monitoring an operation using EDM.

### [Brief Description of Drawings]

Fig. 1 is a diagram illustrating a schematic configuration of a servo system in which a servo driver according to an embodiment of the present invention is incorporated.
Fig. 2 is a diagram illustrating an example of a specific configuration of a servo driver and a controller.
Fig. 3 is a flowchart illustrating an example of a process of safety control of the servo driver.
Fig. 4 is a diagram illustrating a configuration of a safe drive system of the related art corresponding to an STO and an EDM.
Fig. 5 is a diagram illustrating a configuration in which EDM outputs of a safety driver are connected in cascade.
Fig. 6 is a diagram illustrating an example of a specific configuration of an inverter and a controller.

### DESCRIPTION OF THE EMBODIMENTS

Hereinafter, an example of a preferable embodiment for performing the present invention will be described with reference to the drawings. However, configurations and operations of a device described in the following embodiment are examples, and the scope of the present invention is not limited thereto.

### <Configuration of servo system>

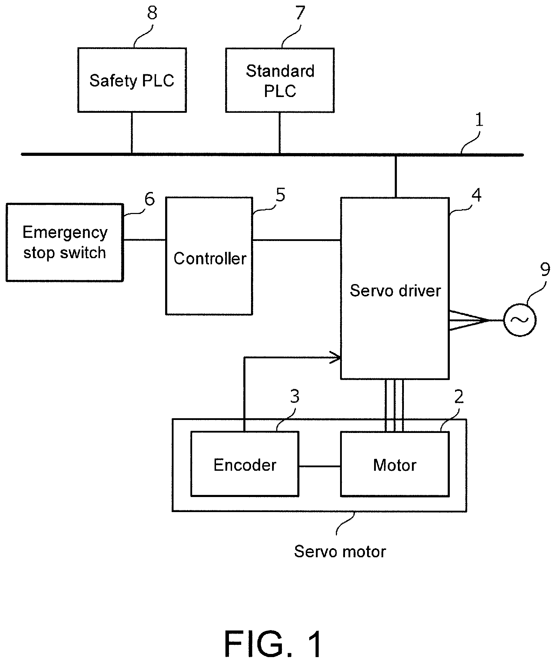

Fig. 1 is a schematic configuration diagram of a servo system in which a servo driver as an embodiment of a motor control device of the present invention is incorporated. The servo system includes a network 1, a motor 2, an encoder 3, a servo driver 4, a controller 5, an emergency stop switch 6, a standard programmable logic controller (PLC) 7, and a safety PLC 8. The motor 2 and the encoder 3 form a servo motor. Among these configurations, the encoder 3, the servo driver 4, the controller 5, the emergency stop switch 6, and the safety PLC 8 are safety devices (safety devices) appropriate for functional safety.

The servo system is a system for driving the motor 2, and the motor 2 is incorporated in various mechanical devices (for example, an arm and a conveying device of an industrial robot) (not illustrated) as an actuator for the devices. For example, the motor 2 may be an AC motor. The encoder 3 is attached to the motor 2 in order to detect an operation of the motor 2. The encoder 3 generates a feedback signal indicating the detected operation of the motor 2 and transmits the feedback signal to the servo driver 4. The feedback signal includes, for example, positional information on a rotational position (angle) of a rotational shaft of the motor 2, and information on a rotational speed of the rotational shaft. A general incremental encoder or absolute encoder can be applied to the encoder 3.

The servo driver 4 receives an operation command signal regarding an operation (motion) of the motor 2 from the standard PLC 7 through the network 1 (a communication line), and receives the feedback signal output from the encoder 3. The servo driver 4 executes servo control on the driving of the motor 2 on the basis of the operation command signal from the standard PLC 7 and the feedback signal from the encoder 3. Further, the servo driver 4 is also connected to the safety PLC 8 via the network 1. Accordingly, the servo driver 4 performs monitoring of occurrence of an abnormality regarding the motor 2 or the servo driver 4 on the basis of the monitoring command signal received from the safety PLC 8, and sends a result of monitoring to the safety PLC 8.

Further, the servo driver 4 calculates a command value regarding the operation of the motor 2 on the basis of the operation command signal from the standard PLC 7 and the feedback signal from the encoder 3. Further, the servo driver 4 supplies a drive current to the motor 2 so that the operation of the motor 2 follows the command value. It should be noted that AC power to be sent from the AC power supply 9 to the servo driver 4 is used for the supplied current. In the embodiment, the servo driver 4 is of a type that receives a three-phase AC current, but may be of a type that receives a single-phase AC current.

The controller 5 is a control device for performing emergency stopping of the servo driver 4. The emergency stop switch 6 is connected to the controller 5. When the emergency stop switch 6 is operated, an emergency stop signal (an STO signal) is sent from the controller 5 to the servo driver 4.

### <Servo drive system>

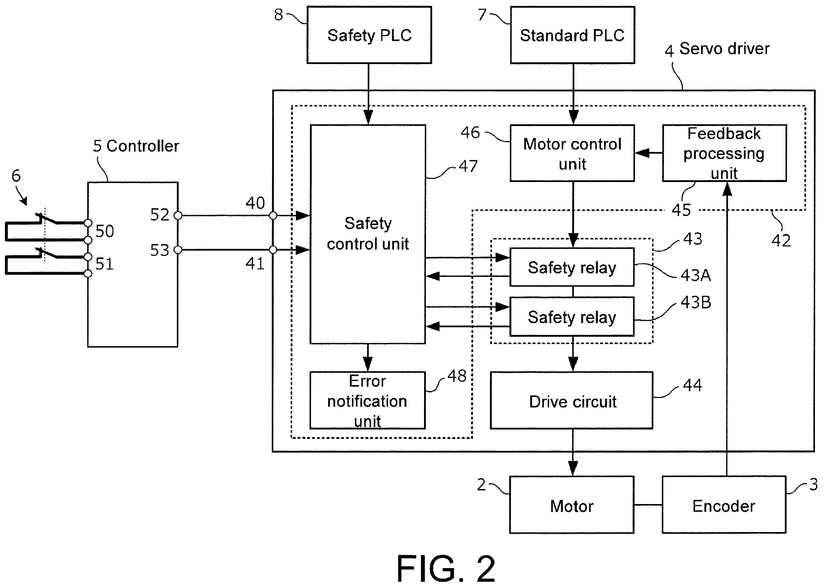

Fig. 2 illustrates an example of a specific configuration of the servo driver 4 and the controller 5. In the present specification, a system configured of the servo driver 4 and the controller 5 is referred to as a servo drive system or a motor control system.

### <Controller>

The controller 5 includes multiplexed safety input terminals 50 and 51 and multiplexed safety output terminals 52 and 53. An emergency stop switch 6 is connected to the safety input terminals 50 and 51. Further, the safety output terminals 52 and 53 are connected to safety input terminals 40 and 41 of the servo driver 4, respectively. Further, the emergency stop switch 6 has two NC (normally closed) contacts, and the two NC contacts enter an open state when the user has operated the emergency stop switch 6. The controller 5 monitors voltages of the two safety input terminals 50 and 51, and outputs a signal at a high level from the two safety output terminals 52 and 53 when voltage levels of the two safety input terminals 50 and 51 are high, that is, when the emergency stop switch 6 is closed (when the emergency stop switch 6 has not been pressed). When the voltage level of at least one of the safety input terminals 50 and 51 becomes low, the controller 5 outputs the STO signal (a signal at a low level) from the two safety output terminals 52 and 53.

### <Servo driver>

The servo driver 4 has multiplexed safety input terminals 40 and 41, a control circuit 42, an interruption circuit 43, and a drive circuit 44. The control circuit 42 includes a microprocessor (MPU), a memory, other logic circuits, and the like. As illustrated in Fig. 2, the control circuit 42 provides functions of a feedback processing unit 45, a motor control unit 46, a safety control unit 47, an error notification unit 48, and the like by the MPU executing a program stored in the memory.

The feedback processing unit 45 generates a feedback value on the basis of the feedback signal from the encoder 3. For example, when a pulse is output from the encoder 3, the feedback processing unit 45 counts this pulse to calculate a rotational position or a rotational speed of a rotation shaft of the motor 2, and generates a feedback value including a value indicating the position or the speed.

The motor control unit 46 receives the operation command signal from the standard PLC 7 and receives the feedback value from the feedback processing unit 45. The motor control unit 46 generates a command value for executing position feedback control and speed feedback control on the basis of the operation command signal and the feedback value. For example, the motor control unit 46 generates a position command value and a speed command value under feedback control based on the operation command signal and the feedback value. It should be noted that a feedback scheme to be adopted in the feedback control is a scheme in which a servo loop suitable for a predetermined purpose (for example, conveyance of packages) of a mechanical device (for example, a conveyance device) in which the motor 2 is incorporated is formed, and can be appropriately designed. These command values generated by the motor control unit 46 are output as drive signals and are sent to the drive circuit 44 via the interruption circuit 43.

The drive circuit 44 is a circuit for generating and outputting a drive current for driving the motor 2 on the basis of the drive signal output from the motor control unit 46. The drive circuit 44 includes, for example, a circuit including a semiconductor switching element such as an insulated gate bipolar transistor (IGBT), and generates a signal for turning on or off the switching element according to a PWM scheme on the basis of the drive signal from the motor control unit 46, and turns on or off the switching element according to this signal. Accordingly, AC power is supplied to the motor 2 and the motor 2 is driven according to the drive signal.

The interruption circuit 43 is a circuit for interrupting transfer of the drive signal from the motor control unit 46 to the drive circuit 44. When the interruption circuit 43 is in a conduction state, the drive signal output from the motor control unit 46 is sent to the drive circuit 44. On the other hand, when the interruption circuit 43 is operated and the transfer of the drive signal is interrupted, the output from the drive circuit 44 is fixed to OFF. Accordingly, since the power supply to the motor 2 is stopped, an output of a torque from the motor 2 is stopped. The safety control unit 47 controls switching between conduction and interrupted states of the interruption circuit 43. The interruption circuit 43 according to the embodiment enters a conduction state while an ON signal (a voltage signal at a high level) is being applied from the safety control unit 47, and enters an interrupted state when the application of the ON signal is stopped.

The interruption circuit 43 includes a plurality of safety relays 43A and 43B connected in series. With such a redundant configuration, even when a failure occurs in any one of the safety relays, transmission of the drive signal can be stopped and the safety of the servo driver 4 is enhanced. Each of the safety relays 43A and 43B includes an a-contact for switching between conduction and interrupting between the motor control unit 46 and the drive circuit 44, and a b-contact that is complementarily interlocked with the a-contact. The a-contact is a contact that enters an open state (open) when an excitation coil is not energized and enters a closed state (closed) when a voltage is applied to the excitation coil. The a-contact is also referred to as a NO (normally open) contact. The b-contact is a contact that enters a closed state (closed) when the excitation coil is not energized, and enters an open state (open) when a voltage is applied to the excitation coil. The b-contact is also referred to as an NC (normally closed) contact. The a-contact and b-contact of each of the safety relays 43A and 43B are guaranteed to be necessarily in an opposite state through a forced guide contact structure.

When the a-contact of the safety relays 43A and 43B enters an open state (that is, enters an interrupted state), the b-contact enters the closed state such that a closed signal is input to the safety control unit 47. On the other hand, even if the ON signal is applied to the safety relays 43A and 43B, the b-contact does not enter the closed state unless the a-contact is switched in the closed state due to a defect (welding or the like) of the a-contact, and thus, the closed signal is not input to the safety control unit 47. Therefore, the safety control unit 47 can detect a failure or defect of the interruption circuit 43 by monitoring the closed signal. It should be noted that, in the embodiment, the b-contact outputs of the two safety relays 43A and 43B are connected to the safety control unit 47, and when any of the b-contacts is in the open state, the closed signal is not input to the safety control unit 47. With this configuration, it is possible to detect an abnormality in the interruption circuit 43 even when a defect occurs in some of the multiplexed safety relays 43A and 43B.

The safety control unit 47 has a function of executing various controls regarding safety. The safety control unit 47 executes, as main safety control, for example, a process of turning on the interruption circuit 43 in a safe state, a process of switching the interruption circuit 43 to the interrupted state according to the emergency stop signal, a process of checking an abnormality in the interruption circuit 43 on the basis of the closed signal, and a process of prohibiting re-activation when an abnormality is detected. Details of each process will be described below.

The error notification unit 48 has a function of notifying the user that an abnormality has occurred (an error report) when an abnormality has been detected by the safety control unit 47. Any method or means for the error notification may be used. Examples of the method or means include lighting or blinking of an LED, output of a message to a display, voice output, vibration output, and transmission of an error report mail. Further, the error notification unit 48 may transmit an error report to an external device (such as a PLC).

### <Safety control>

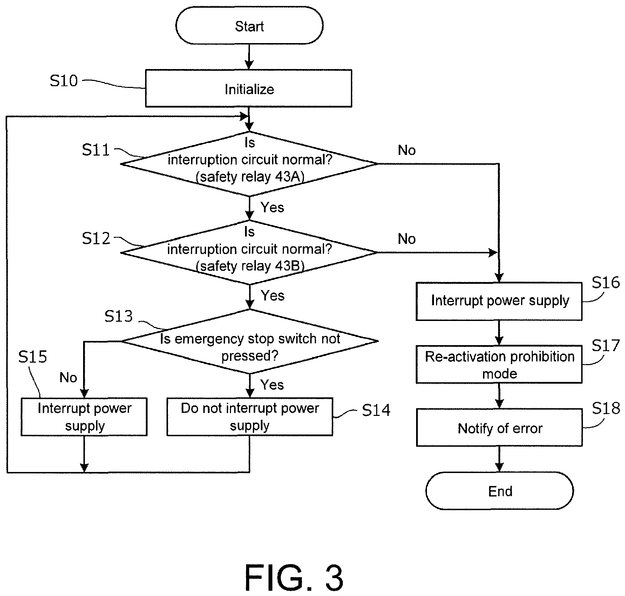

Fig. 3 illustrates an example of a safety control process. When a power supply of the servo driver 4 is turned on, a predetermined initialization process is executed (step S10). It should be noted that although not illustrated, the safety control unit 47 interrupts this flow when any abnormality is detected in the initialization process. After the initialization process is completed, the safety control unit 47 confirms whether or not the interruption circuit 43 is normal on the basis of the b-contact output of the safety relay 43A (step S11) and confirms whether or not the interruption circuit 43 is normal on the basis of the b-contact output of the safety relay 43B (step S12). When the safety control unit 47 confirms that the interruption circuit 43 is normal (YES in both of steps Sll and S12), the safety control unit 47 confirms two inputs from the safety input terminals 40 and 41. When the two inputs of the safety input terminals 40 and 41 are both at the high level, the safety control unit 47 determines that the emergency stop switch has not been pressed (YES in step S13) and does not interrupt the power supply (step S14). Accordingly, the drive control of the motor 2 by the motor control unit 46 is performed according to the operation command signal from the standard PLC 7 (not illustrated).

On the other hand, when at least one of the safety input terminals 40 and 41 is at a low level, the safety control unit 47 determines that the emergency stop switch has been pressed (NO in step S13) and immediately interrupts power supply to the motor 2 (step S15).

When an abnormality in the interruption circuit 43 is detected in step S11 or S12, the safety control unit 47 immediately interrupts power supply to the motor 2 (step S16). The safety control unit 47 sets a re-activation prohibition mode (step S17), and performs an error notification from the error notification unit 48 (step S18). When the re-activation inhibition mode is set, the safety control unit 47 ignores an activation request signal (a reset signal) and maintains an interrupted state of the drive signal (a state in which voltage application to the interruption circuit 43 has been stopped) even when the activation request signal is input to the servo driver 4. The re-activation prohibition mode is maintained until the user performs inspection, repair, and the like of the servo driver 4 to resolve the detected abnormality. With such a safety function, since inadvertent re-activation before the abnormality (for example, welding of the contact) of the interruption circuit 43 is not resolved can be suppressed, the safety of the servo driver 4 can be secured. It should be noted that the activation request signal may be input from an external device (such as a controller or a PLC) or may be input from a reset switch provided in the servo driver 4.

### <Advantages of embodiment>

With the configuration of the embodiment described above, after the servo driver 4 issues an interrupting command to the interruption circuit 43 according to the emergency stop signal, the interruption circuit 43 checks by itself whether or not the interruption circuit 43 has operated normally, and prohibits re-activation of the servo driver 4 when normal operation cannot be confirmed. Therefore, when a failure or a defect (for example, welding of the a-contact) of the interruption circuit 43 occurs, inadvertent re-activation can be suppressed and safety is secured.

Further, by providing such a safety function (self-diagnosis function of the interruption circuit 43) to the servo driver 4, EDM monitoring on the controller 5 side becomes unnecessary, and as a result, it is possible to eliminate unnecessary system shutdown due to a wrong determination of the controller, which is a problem of the related art. Further, since EDM wirings between the controller 5 and the servo driver 4 are not necessary, installation work or wirings of the system can be simplified. In addition, there is an advantage that it is possible to substantially eliminate restriction on the number of servo drivers 4 that can be connected to one controller 5, and to improve a degree of freedom in system configuration. Further, since the servo driver 4 itself has an error notification function, it is possible to improve convenience for users.

Further, according to the self-diagnosis function of the embodiment, an abnormality in the interruption circuit 43 is detected as long as a failure occurs in some of the multiplexed safety relays, and re-activation of the servo driver 4 is prohibited. Therefore, it is possible to rapidly detect an abnormality in the interruption circuit 43 before the interruption circuit 43 completely fails, and prevent emergency stopping from being disabled in advance.

### <Others>

The above description merely illustrates the embodiment of the present invention. The present invention is not limited to the above specific embodiments, and various modifications can be made within the scope of the technical idea thereof. For example, a device other than the safety relay may be used as a switch for the interruption circuit 43. Although the emergency stop switch 6 is connected to the controller 5 in the above embodiment, a sensor (a laser scanner, a safety mat, a light curtain, or the like) that detects intrusion or presence of a person, a sensor or switch that detects opening and closing of a guard, or the like may be used as an input device. Further, although it is particularly preferable for the present invention to be applied to a safety device, the present invention may be applied to a non-safety device such as an ordinary controller or an ordinary servo driver.

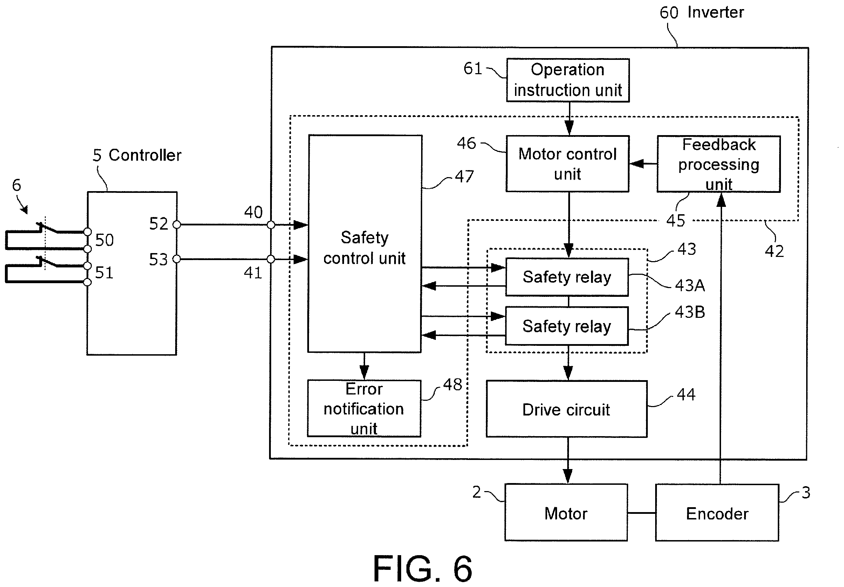

Although the servo driver 4 as a motor control device of the present invention is illustrated in the above example, the inverter 60 illustrated in Fig. 6 can also be adopted as the motor control device in place of this aspect. It should be noted that an induction motor or the like can be illustrated as the motor 2 driven and controlled by the inverter 60. Fig. 6 is a diagram illustrating functional blocks of the inverter 60. As illustrated in Fig. 6, the inverter 60 includes a plurality of functional units. Among the functional units, the functional units substantially the same as the functional units included in the servo driver 4 illustrated in Fig. 2 are denoted with the same reference numerals, and detailed description thereof will be omitted. Specifically, the inverter 60 also includes an operation instruction unit 61, in addition to the functions of the servo driver 4 illustrated in Fig. 2.

The operation instruction unit 61 generates the operation command signal for driving the motor 2 on the basis of a request operation given by the user via an input device (not illustrated) in advance. Therefore, no operation command signal is provided from an external device (for example, the standard PLC 7) to the inverter 60, and the inverter 60 drives and controls the motor 2 according to a predetermined feedback scheme on the basis of the feedback signal from the encoder 3 and the operation command signal from the operation instruction unit 61. Alternatively, the operation command signal may be provided from the external device to the inverter 60. In the inverter 60 configured in this manner, it is possible to achieve the same operation and effects as those of the servo driver 4 described above.

### [Reference Signs List]

- 1: Network
- 2: Motor
- 3: Encoder
- 4: Servo driver
- 5: Controller
- 6: Emergency stop switch
- 7: Standard PLC
- 8: Safety PLC
- 9 AC: power supply
- 40, 41: Safety input terminal
- 42: Control circuit
- 43: Interruption circuit
- 43A, 43B: Safety relay
- 44: Drive circuit
- 45: Feedback processing unit
- 46: Motor control unit
- 47: Safety control unit
- 48: Error notification unit
- 50, 51: Safety input terminal
- 52, 53: Safety output terminal
- 60: Inverter
- 61: Operation instruction unit

## Claims

1. A motor control device that drives a motor, the motor control device being connectable to a controller that outputs an emergency stop signal, the motor control device comprising:
a motor control unit that outputs a drive signal of the motor;
a drive circuit that supplies a drive current for driving the motor to the motor on the basis of the drive signal output from the motor control unit;
an interruption circuit that interrupts transfer of the drive signal from the motor control unit to the drive circuit;
an input terminal to which the emergency stop signal is input; and
a safety control unit that instructs the interruption circuit to interrupt transfer of the drive signal when the emergency stop signal is input to the input terminal, checks whether or not the interruption circuit has normally operated, and prohibits re-activation of the motor control device when a check result indicating that the interruption circuit has normally operated is not obtained.

2. The motor control device according to claim 1, further comprising:
an error notification unit that notifies a user that an abnormality has occurred in an operation of the interruption circuit when the check result indicating that the interruption circuit has normally operated is not obtained.

3. The motor control device according to claim 1 or 2,
wherein the interruption circuit includes a safety relay including an a-contact for switching between conduction and interrupting between the motor control unit and the drive circuit, and a b-contact complementarily interlocked to the a-contact, and
the safety control unit interrupts transfer of the drive signal by stopping application of a voltage to the safety relay to cause the a-contact to enter an open state, and checks whether or not the interruption circuit has normally operated on the basis of a state of the b-contact.

4. The motor control device according to claim 3, wherein the interruption circuit includes a plurality of the safety relays connected in series.

5. The motor control device according to claim 4, wherein the safety control unit
determines that the interrupting in the interruption circuit has been executed normally when the b-contacts of all the safety relays are in a closed state, and
determines that there is an abnormality in the interruption circuit when the b-contact of at least one of the safety relays is in an open state.

6. The motor control device according to any one of claims 3 to 5, wherein when the check result indicating that the interruption circuit has normally operated is not obtained, the safety control unit maintains a state in which the application of the voltage to the safety relay has stopped until an abnormality in the interruption circuit is eliminated, even when an activation request signal is input.

7. A motor control system comprising:
a motor control device according to any one of claims 1 to 6; and
a controller including an output terminal for outputting an emergency stop signal,
wherein the output terminal of the controller and the input terminal of the motor control device are connected, and
there is no path for feeding back a check result indicating whether or not the interruption circuit has normally operated from the motor control device to the controller.
